# EUROPEAN PATENT SPECIFICATION

(11) **EP 3 333 013 B1**
(45) Date of publication and mention of the grant of the patent: **02.10.2019**
(21) Application number: 17205837.2
(22) Date of filing: 07.12.2017
(51) Int. Cl.: B60P 3/04

(54) **TRAILER IN PARTICULAR FOR HORSE TRANSPORT**
ANHÄNGER INSBESONDERE FÜR PFERDETRANSPORT
REMORQUE, EN PARTICULIER POUR LE TRANSPORT DE CHEVAL

(30) Priority: 08.12.2016 NL 2017961; 31.01.2017 NL 2018265
(43) Date of publication of application: 13.06.2018
(73) Proprietor: Sirius Trailers BV, 6581 KD Malden (NL)
(72) Inventor: VLOET, Antwin, 5437 PM Beers (NL); BOUWHUIS, Fons, 4014 NB Wadenoijen (NL)
(74) Representative: Verhees, Godefridus Josephus Maria

(56) References cited:
- DE-A1-102011 011 877
- DE-U1- 9 309 517
- US-A- 5 174 240

## Description

### Field of the invention

The invention relates to a vehicle, more particularly for horse transport, comprising:
- a horsebox provided with a bottom,
- wheels which are connected to the horsebox,
- a ramp which is present on one side of the vehicle, for loading and unloading horses,
- a partition extending in the horsebox, and
- at least a partition pole to which the partition is fitted, which partition pole is connected to the bottom of the horsebox,
where the bottom of the horsebox is provided with a hole through which the partition pole is projected.

### State of the art

A vehicle of this type is known from DE 93 09 517.1 U. The partition of this known vehicle divides the horsebox in two or more compartments for the transport of two or more horses. The partition extends from the bottom to approximately halfway the ceiling. A sleeve has been fitted in the bottom, in which sleeve one end of the partition pole is accommodated.

### Summary of the invention

It is an object of the invention to provide a vehicle of the type defined in the opening paragraph which is safer than the known vehicle. To this end the vehicle according to the invention is characterized in that the bottom end of the partition pole is present underneath the bottom at a distance from the bottom, and floor beams are present underneath the bottom of the horsebox where the part of the partition pole that is present underneath the bottom is connected to one or more of the bottom beams by guy elements, so that this part is secured in radial direction relative to the bottom of the horsebox and the partition pole is maintained in an upright position. The partition pole is locked in lateral direction in the tubular hole in the floor. By securing in lateral direction also the part of the partition pole extending underneath the underside of the bottom, the partition pole is maintained in upright position in a sturdier way and the partition will better be able to keep the horse in the vehicle standing on its feet during transport, so that there will be less chance of accidents.

Preferably, the guy elements are connected to the bottom end of the partition pole.

An advantageous embodiment of the vehicle according to the invention is characterized in that a sleeve open at the top and closed at the bottom is fitted to the bottom in the opening in the floor, where the part of the partition pole present underneath the bottom of the floor is accommodated in the sleeve and the sleeve is connected to one or more of the floor beams by means of the guy elements. By not fitting the partition pole itself to the floor but by installing a sleeve underneath the floor which can accommodate the partition pole, the partition pole and the partition with it can be removed in a simple and rapid manner if so desired. The sleeve preferably contains an inner sleeve in which the bottom end of the partition pole is fitted.

A further advantageous embodiment of the vehicle according to the invention is characterized in that at the top of the partition pole is provided an operating element (preferably a turning knob) which is connected via a transfer element (preferably a rod) to a securing mechanism provided with a securing element located in the bottom of the partition pole, where when the securing mechanism is operated the securing element (for example a pin) is brought outward until it hits the inside of the sleeve and thereby secures the partition pole in the sleeve.

A still further advantageous embodiment of the vehicle according to the invention is characterized in that the vehicle is a trailer and is provided with a coupling that is present at the front of the horsebox and is connected to the horsebox, for coupling the trailer to a towing vehicle.

### Brief description of the drawings

The invention will be described hereinbelow in more detail based on an example of embodiment of the vehicle according to the invention represented in the drawing figures, in which:
Fig. 1 shows a longitudinal cross section of the vehicle;
Fig. 2 shows a rear view of the vehicle;
Fig. 3 shows bottom view of the vehicle;
Fig. 4 shows the partition with partition pole and sleeve including guy wires; and
Fig. 5 shows a cross-sectional view of the sleeve accommodating the end of the partition pole.

### Detailed description of the drawings

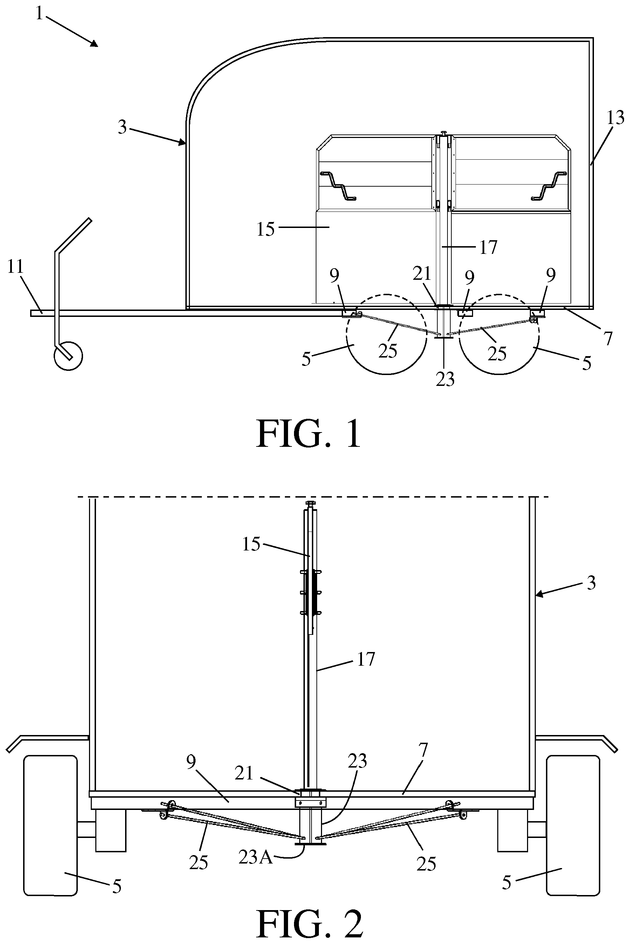

Figs. 1 to 3 show an embodiment of the vehicle for horse transport according to the invention represented in a longitudinal cross sectional view and rear and bottom views respectively. The vehicle 1 is arranged as a trailer and has a horsebox 3 comprising wheels 5 connected to it. Underneath the bottom 7 of the horsebox are arranged floor beams 9 which form part of a chassis. At the front of the chassis is present a coupling 11 for coupling the vehicle to a towing vehicle. At the rear of the horsebox there is a ramp 13 for loading and unloading horses.

Inside the horsebox 7 there is a partition 15 dividing the space in the horsebox in two, so that two horses may be transported. The partition is affixed to a partition pole 17 which is connected to the bottom 7 of the horsebox. The partition and the partition pole extend from the bottom to roughly halfway the roof 19 of the horsebox. The bottom 7 of the horsebox has a hole 21 and a sleeve open at the top and closed at the bottom is fitted to the bottom at the location of this hole. The partition pole 17 is lowered with its bottom end in the sleeve and is locked in radial direction in the sleeve so that the partition pole is maintained in an upright position. The bottom of the sleeve 23 is connected by means of guy wires 25 or guy rods to the floor beams 9 underneath the bottom 7 of the horsebox.

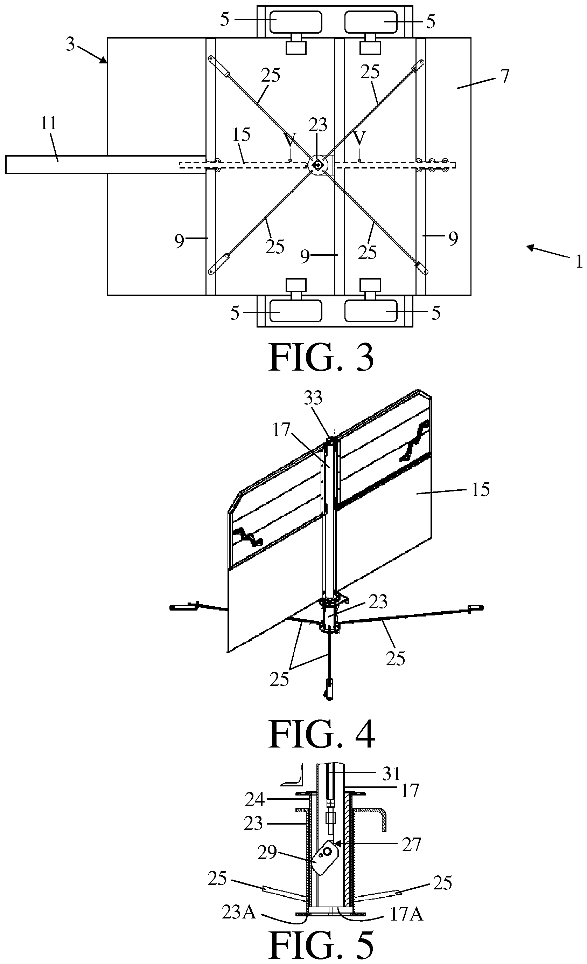

Fig. 4 separately shows for illustrative purposes the partition 15 with the partition pole 17 and the sleeve 23 with guy wires 25.

For locking the partition pole 17 in the sleeve 23 there is a securing mechanism in the bottom of the partition pole. Fig. 5 shows a cross-sectional view at the location of the sleeve along line V-V of Fig. 3 in which the securing mechanism is visible. The securing mechanism comprises a movable securing element (rotatable pin) which can be pushed against the inside of the sleeve. The securing element is connected via a transfer element 31 (rod) to an operating element 33 (turning knob, cf. Fig. 4). The securing mechanism has a right-angled transfer which converts a rotation of the rod to a rotation of the pin. Inside the sleeve 23 is located an inner sleeve 24 which accommodates the bottom end 17A of the partition pole 17.

Albeit the invention has been described in the foregoing based on the drawing figures, it should be observed that the invention is not by any manner or means restricted to the embodiment shown in the drawing figures. The invention also extends to all embodiments deviating from the embodiment shown in the drawing figures within the spirit and scope defined by the claims.

## Claims

1. A vehicle, more particularly for horse transport, comprising:
- a horsebox (3) provided with a bottom (7),
- wheels (5) which are connected to the horsebox,
- a ramp (13) which is present on one side of the vehicle, for loading and unloading horses,
- a partition (15) extending in the horsebox, and
- at least a partition pole (17) to which the partition is fitted, which partition pole is connected to the bottom (7) of the horsebox,
where the bottom (7) of the horsebox (3) is provided with a hole (21) through which the partition pole (17) is projected, **characterized in that** the bottom end (17A) of the partition pole is present underneath the bottom at a distance from the bottom (7), and floor beams (9) are present underneath the bottom (7) of the horsebox where the part of the partition pole that is present underneath the bottom is connected to one or more of the bottom beams by guy elements (25), so that this part is secured in radial direction relative to the bottom of the horsebox and the partition pole is maintained in an upright position.

2. A vehicle as claimed in claim 1, **characterized in that** the guy elements (25) are connected to the the bottom end (17a, 23A) of the partition pole (17).

3. A vehicle as claimed in claim 1 or 2, **characterized in that** a sleeve (23) open at the top and closed at the bottom is fitted to the bottom (7) in the opening (21) in the floor, where the part of the partition pole (17) present underneath the bottom of the floor is accommodated in the sleeve and the sleeve is connected to one or more of the floor beams by means of the guy elements (25).

4. A vehicle as claimed in claim 3, **characterized in that** the sleeve (23) contains an inner sleeve (24) in which the bottom end (17A) of the partition pole (17) is fitted.

5. A vehicle as claimed ion claim 3 or 4, **characterized in that** at the top of the partition pole (17) is provided an operating element (33) which is connected via a transfer element (31) to a securing mechanism (27) provided with a securing element (29) located in the bottom of the partition pole, where when the securing mechanism is operated the securing element (29) is brought outward until it hits the inside of the sleeve (23) and thereby secures the partition pole (17) in the sleeve.

6. A vehicle as claimed in any one of the preceding claims, **characterized in that** the vehicle is a trailer and is provided with a coupling (11) that is present at the front of the horsebox (3) and is connected to the horsebox, for coupling the trailer to a towing vehicle.

## Patentansprüche

1. Fahrzeug insbesondere für den Pferdetransport, das Folgendes umfasst:
- eine mit einem Boden (7) versehene Kabine (3),
- mit der Kabine verbundene Räder (5),
- eine an einer Seite der Kabine angeordnete Klappe (13) für das Ein- und Ausladen von Pferden,
- ein in der Kabine angebrachtes Trennschott (15), und
- mindestens einen Pfosten (17), an dem das Trennschott befestigt ist, wobei der besagte Pfosten mit dem Boden (7) der Kabine verbunden ist,
wobei im Boden (7) der Kabine (3) eine Öffnung (21) vorhanden ist, durch die der Pfosten (17) hindurchführt, **dadurch gekennzeichnet, dass** das untere Ende (17A) des Pfostens im Abstand zur Unterseite des Bodens (7) unter dem Boden angeordnet ist und unter dem Boden der Kabine (7) Fußbodenbalken (9) angebracht sind, und wobei der unter der Unterseite des Bodens befindliche Teil des Pfostens durch Abspannelemente (25) mit einem oder mehreren der Fußbodenbalken verbunden ist, so dass dieser Teil in radialer Richtung zum Boden der Kabine fixiert ist und der Pfosten in aufrechter Position gehalten wird.

2. Fahrzeug nach Anspruch 1, **dadurch gekennzeichnet, dass** die Abspannelemente (25) im Bereich des unteren Endes (17A, 23A) des Pfostens (17) mit dem Pfosten verbunden sind.

3. Fahrzeug nach einem der Ansprüche 1 oder 2, **dadurch gekennzeichnet, dass** eine an ihrer Oberseite offene und an ihrer Unterseite geschlossene Hülse (23) im Bereich der Öffnung (21) am Boden (7) befestigt is, wobei der unter der Unterseite des Bodens befindliche Teil des Pfostens (17) in der Hülse steckt und die Hülse durch die Abspannelemente (25) mit einem oder mehreren der Fußbodenbalken verbunden ist.

4. Fahrzeug nach Anspruch 3, **dadurch gekennzeichnet, dass** in der Hülse (23) eine Innenhülse (24) angebracht ist, in der sich der Pfosten (17) mit seinem unteren Ende (17A) befindet.

5. Fahrzeug nach einem der Ansprüche 3 oder 4, **dadurch gekennzeichnet, dass** sich an der Oberseite des Pfostens (17) ein Bedienelement (33) befindet, das über ein Übertragungselement (31) mit einer im unteren Teil des Pfostens vorhandenen, mit einem Arretierelement (29) versehenen Arretiermechanik (27) verbunden ist, wobei das Arretierelement (29) bei Betätigung der Arretiermechanik bis an die Innenwand der Hilse (23) nach außen bewegt wird und dabei den Pfosten (17) in der Hilse fixiert.

6. Fahrzeug nach einem der vorangegangenen Ansprüche, **dadurch gekennzeichnet, dass** es sich bei dem Fahrzeug um einen Anhänger handelt und dieser mit einer Kupplung (11) versehen ist, die an der Vorderseite der Kabine (3) angeordnet und mit der Kabine verbunden ist und dazu dient, den Anhänger an ein Zugfahrzeug anzukoppeln.

## Revendications

1. Véhicule pour notamment le transport de chevaux, comprenant :
- une cabine (3) pourvue d'un plancher (7),
- des roues (5)étant reliées à la cabine,
- un abattant (13) se trouvant sur un côté de la cabine, pour faire entrer et sortir les chevaux,
- une cloison mitoyenne (15) se trouvant dans la cabine, et
- au moins un pilier (17) auquel est fixée la cloison mitoyenne, lequel pilier est relié au plancher (7) de la cabine,
où le plancher (7) de la cabine (3) est pourvu d'un trou (21) dans lequel est introduit le pilier (17), **caractérisé en ce que** l'extrémité inférieure (17A) du pilier se trouve à distance du dessous du plancher (7) sous le plancher et **en ce que** des solives (9) se trouvent sous le plancher (7) de la cabine, où la partie du pilier se trouvant sous le dessous du plancher est reliée à une ou plusieurs des solives grâce à des haubans (25) afin que cette partie soit immobilisée en direction radiale par rapport au plancher de la cabine et que le pilier reste droit.

2. Véhicule selon la revendication 1, **caractérisé en ce que** les haubans (25) sont reliés au pilier au niveau de l'extrémité inférieure (17A, 23A) du pilier (17).

3. Véhicule selon la revendication 1 ou 2, **caractérisé en ce qu'**une gaine (23) ouverte sur le dessus et fermée sur le dessous est fixée au plancher (7) au niveau du trou (21), où la partie du pilier (17)étant sous le dessous du plancher se trouve dans la gaine et la gaine est reliée à une ou plusieurs des solives grâce aux haubans (25).

4. Véhicule selon la revendication 3, **caractérisé en ce que** dans la gaine (23) se trouve une gaine intérieure (24) dans laquelle se situe le pilier (17) en son extrémité inférieure (17A).

5. Véhicule selon la revendication 3 ou 4, **caractérisé en ce qu'**au sommet du pilier (17) se trouve un élément de commande (33) qui par l'intermédiaire d'un élément de transmission (31) est relié à un mécanisme d'immobilisation (27) se trouvant en bas dans le pilier et étant pourvu d'un élément d'immobilisation (29), où, lors de la commande du mécanisme d'immobilisation, l'élément d'immobilisation (29) est déplacé vers l'exérieur jusquà toucher le dedans de la gaine (23) et de ce fait immobilise le pilier (17) dans la gaine.

6. Véhicule selon une des revendications précédentes, **caractérisé en ce que** le véhicule est une remorque et est pourvu d'un attelage (11) se trouvant à l'avant de la cabine (3) etétant relié à la cabine, ceci pour pouvoir atteler la remorque derrière un véhicule de tractage.
